(19) **Europäisches Patentamt**

**European Patent Office**

**Office européen des brevets**

(11) Numéro de publication : **0 537 054 B1**

# (12) FASCICULE DE BREVET EUROPEEN

(45) Date de publication du fascicule du brevet :
**28.06.95 Bulletin 95/26**

(51) Int. Cl.⁶ : **G01J 3/28,** G02F 1/015

(21) Numéro de dépôt : **92402693.3**

(22) Date de dépôt : **02.10.92**

(54) **Spectromètre.**

(30) Priorité : **11.10.91 FR 9112565**

(43) Date de publication de la demande :
**14.04.93 Bulletin 93/15**

(45) Mention de la délivrance du brevet :
**28.06.95 Bulletin 95/26**

(84) Etats contractants désignés :
**DE GB**

(56) Documents cités :
**WO-A-90/06596**
**FR-A- 2 637 092**
**US-A- 3 308 712**
**US-A- 4 394 069**
**US-A- 4 492 434**
**US-A- 4 900 113**

(56) Documents cités :
**PATENT ABSTRACTS OF JAPAN vol. 12, no.
255 (P-732)(3102) 19 Juillet 1988 & JP-A-63 044
132 (RES DEV CORP OF JAPAN) 25 février
1988**
**PATENT ABSTRACTS OF JAPAN vol. 11, no.
137 (P-572)(2584) 2 Mai 1987 & JP-A-61 277 024
(SHARP CORP) 8 décembre 1986**

(73) Titulaire : **THOMSON-CSF
173, Boulevard Haussmann
F-75008 Paris (FR)**

(72) Inventeur : **Rosencher, Emmanuel
THOMSON-CSF,
SCPI,
Cedex 67
F-92045 Paris la Defense (FR)**

(74) Mandataire : **Guérin, Michel et al
THOMSON-CSF
SCPI
B.P. 329
50, rue Jean-Pierre Timbaud
F-92402 Courbevoie Cédex (FR)**

EP 0 537 054 B1

## Description

L'invention concerne un spectromètre et plus particulièrement un dispositif à l'état solide permettant l'analyse en longueurs d'ondes d'une onde électromagnétique (spectrophotomètre). Selon un mode de réalisation préféré de l'invention, ce dispositif est réalisé à base de matériaux semiconducteurs à puits quantiques.

On connaît les détecteurs de radiations à multipuits quantiques (DMPQ) utilisant des transitions entre niveaux liés et niveaux libres d'une part et entre niveaux liés d'autre part. On rappelle brièvement leur mode de fonctionnement (voir Demande de Brevet WO 90/06596 et Demande de Brevet JP-63 44 132).

Il s'agit d'un empilement de couches alternées d'un semiconducteur à petit gap (SPG) entre deux semiconducteurs de grands gaps (SGG) comme représenté en figure la. L'écart énergétique entre les bas de bande de conduction des deux semiconducteurs est le "band-offset" $\Delta E$. Par exemple, ces deux semiconducteurs peuvent être en GaAs pour SPG et $Al_x Ga_{1-x}As$ (où x varie entre 0 et 1). Les électrons dans une telle structure sont soumis à un puits de potentiel de profondeur $\Delta E$ et de largeur d, où d est l'épaisseur de la couche SPG. Si la largeur d est suffisamment petite, l'énergie des électrons correspondant au mouvement perpendiculaire aux couches est quantifiée en niveaux $E_1$, $E_2$...

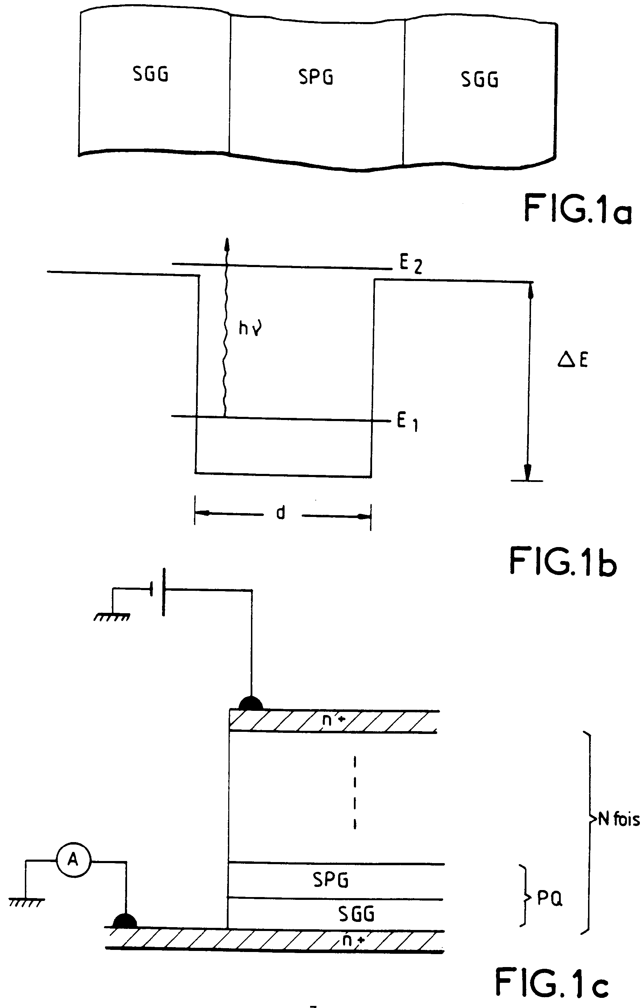

Dans les détecteurs photoconductifs liés-libres, le niveau $E_1$ est lié ($E_1 < \Delta E$) et le niveau $E_2$ est libre ($E_2 \geqq \Delta E$). Si le niveau $E_1$ est occupé par un électron (par dopage par exemple), un photon d'énergie $h\nu$ supérieure à $\Delta E - E_1$ provoque une transition optique (voir figure 1b). L'électron est alors libre de se déplacer et peut être détecté comme un courant aux bornes du multipuits quantique (voir figure 1c).

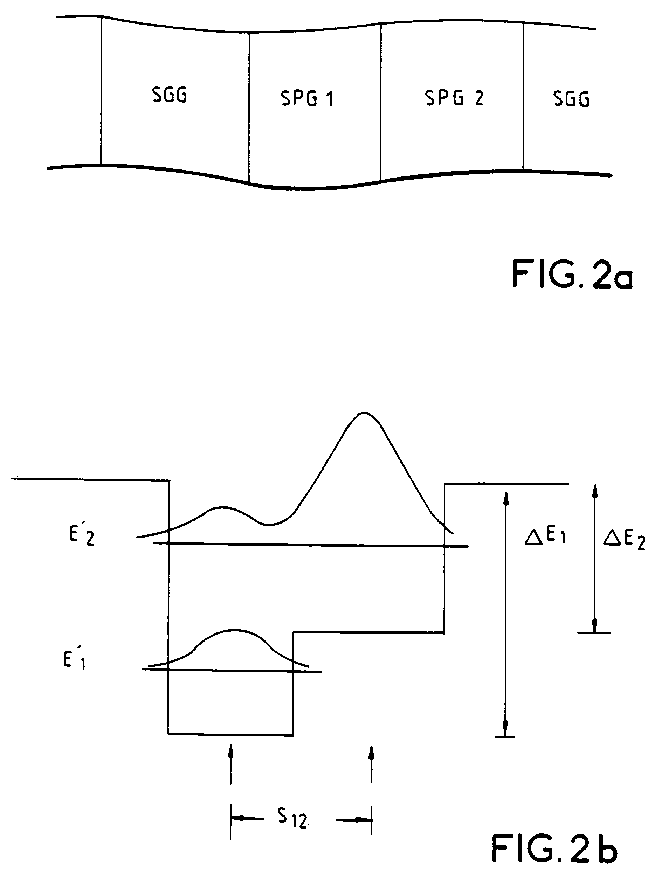

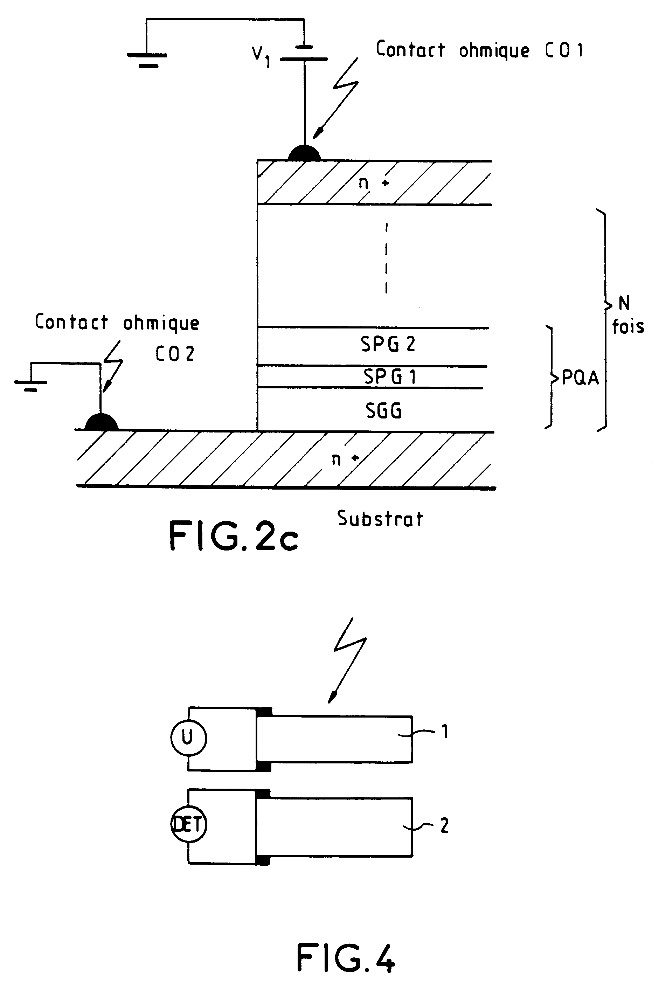

On connaît aussi les modulateurs optiques utilisant les puits quantiques asymétriques (PQA). Un exemple de puits quantique asymétrique est représenté en figures 2a et 2b. Le puits quantique est formé de deux semiconducteurs à petits gaps SPG1 et SPG2 avec E1 > $\Delta$E2. Ceci est réalisé par exemple avec GaAs pour SPG1 et $Al_x Ga_{1-x}$ As pour SPG2. Ce puits quantique est confiné entre deux barrières d'un semiconducteur à grand gap SGG qui peut être réalisé en $Al_y Ga_{1-y}$ As avec y compris entre 0 et 1 et supérieur à x.

Les empilements sont réalisés de telle sorte qu'il y ait au moins deux niveaux liés $E'_1$ et $E_{2'}$ dans le puits. Un photon d'énergie $h\nu_o = E_2' - E_1'$ est alors absorbé dans le puits (figure 2b). Ces puits quantiques peuvent être empilés pour réaliser une structure à multipuits quantiques asymétriques (MPQA) comme représenté en figure 2c.

Lorsque l'on applique un champ électrique F aux bornes CO1 et CO2 des MPQA, la position des niveaux $E'_1$ et $E'_2$ est changée : c'est l'effet STARK linéaire. La longueur d'onde de résonance pour les photons devient alors :

$$h\nu(F) = h\nu_o + qF\delta_{12}$$

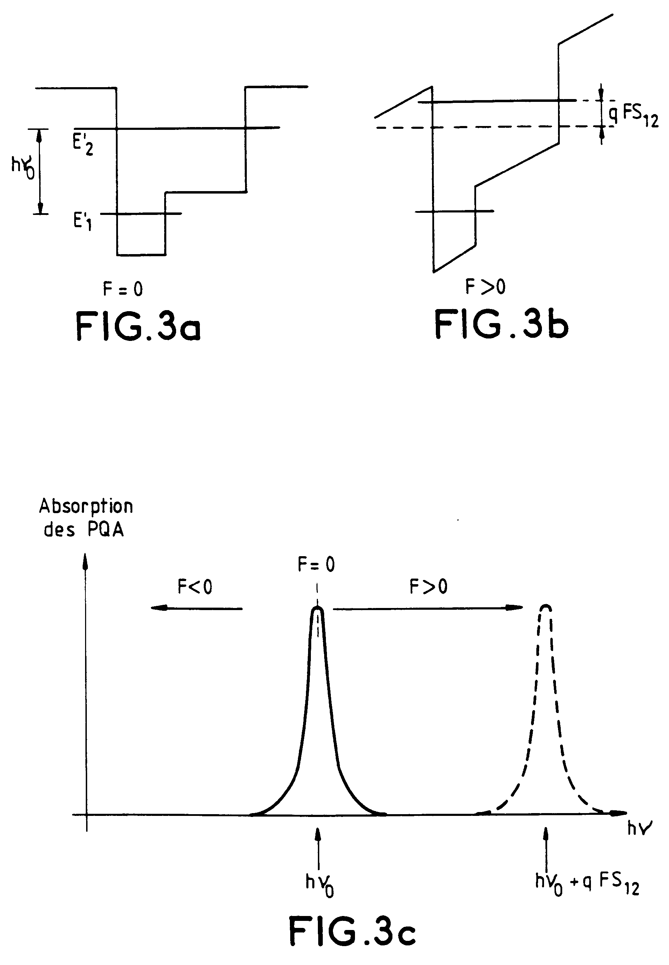

où q est la charge de l'électron et $\delta_{12}$ est la distance entre les positions moyennes de l'électron sur le niveau $E'_1$ et le niveau $E'_2$ (voir figure 3a). Les pics d'absorption sont alors déplacés vers des énergies plus grandes (longueurs d'onde plus faibles) pour F > 0 (figure 3b) et moins grandes pour F < 0.

Comme cela est représenté sur la figure 3c, le pic d'absorption du modulateur peut donc être déplacé à partir d'une longueur d'onde donnée, vers des longueurs d'ondes plus faibles (F > 0) ou plus élevées F < 0.

On connaît également un dispositif modulateur associé à un détecteur (voir Brevet US 4 492 434) mais dans lequel ces deux dispositifs ne sont pas accolés.

L'objet de l'invention est de réaliser un dispositif d'analyse de spectre de fréquences optiques à l'aide des dispositifs connus à puis quantiques.

L'invention concerne donc un spectromètre comprenant :

- un modulateur d'intensité lumineuse en matériau semiconducteur possédant une gamme de longueurs d'ondes de modulation qui est réglable en fonction d'un signal de commande, ce modulateur recevant un faisceau optique et retransmettant un faisceau optique modulé dans lequel toute longueur d'onde contenue dans la gamme de longueurs d'ondes de modulation est modulée par le modulateur ;
- un détecteur d'intensité lumineuse fonctionnant dans une large gamme de longueurs d'ondes, recevant le faisceau optique modulée et fournissant un signal électrique en fonction de l'intensité détectée
  caractérisé en ce qu'il comporte :
- sur un substrat un empilement de couches alternées de matériaux semiconducteurs à grand gap et de matériaux semiconducteurs à petit gap enserré entre deux couches de matériaux semiconducteurs à petit gap dopées et supportant chacune un contact métallique, cet ensemble formant un détecteur en matériaux semiconducteurs à puits quantiques ;
- sur le détecteur, au moins un empilement de couches alternées de matériau semiconducteur à grand gap et de matériau semiconducteur à petit gap cet empilement de couches étant enserré entre deux couches de matériau semiconducteur à petit gap dopées, recouvertes partiellement chacune d'un contact métallique, cet ensemble formant le modulateur ;
- une source de tension et un détecteur d'intensité connectés aux contacts ohmiques du détecteur ;
- une source de tension commandable connectée aux contacts ohmiques du modulateur.

Les différents objets et caractéristiques de l'invention apparaîtront plus clairement dans la description qui va suivre et dans les figures annexées qui représentent ;

- les figures 1a à 3c, des dispositifs connus dans la technique et déjà décrits précédemment ;
- la figure 4, un exemple de réalisation générale d'un spectrophotomètre selon l'invention ;
- les figures 5a, 5b, un exemple de réalisation préféré d'un spectrophotomètre selon l'invention ;
- les figures 6a à 6c des diagrammes de fonctionnement du spectrophotomètre de la figure 5a ;
- les figures 7a et 7b des diagrammes de fonctionnement du spectrophotomètre de l'invention fonctionnant sous la commande d'un signal de tension modulé.

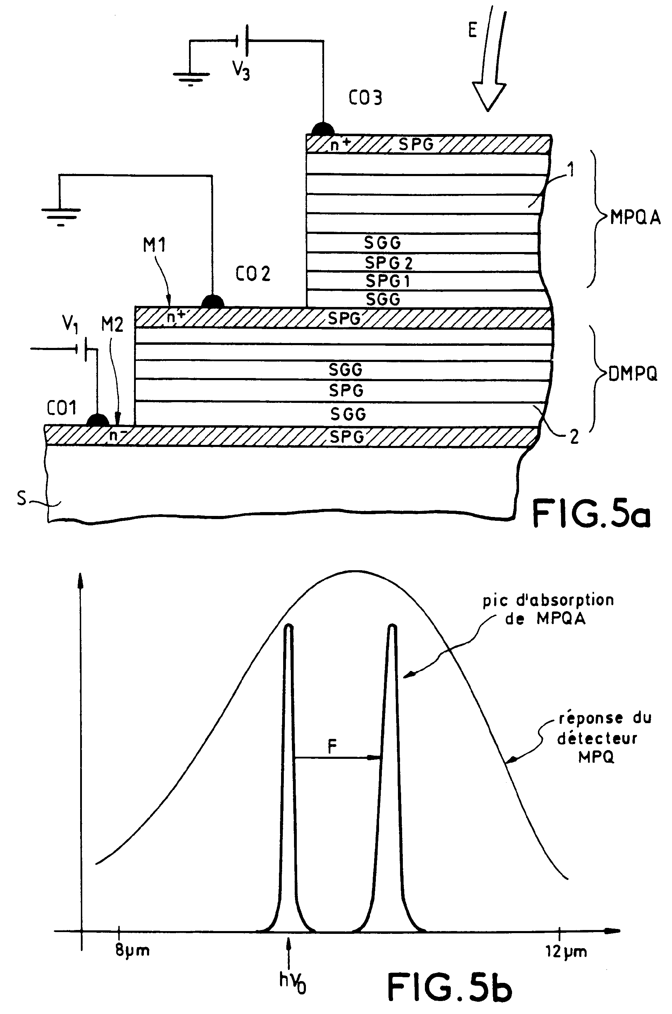

En se reportant à la figure 4, on va donc tout d'abord décrire un exemple général de réalisation d'un spectrophotomètre selon l'invention. Ce spectrophotomètre comporte un modulateur d'intensité lumineuse 1 modulant la lumière dans une gamme étroite de longueur d'onde (point de modulation). Aux autres longueurs d'ondes, le modulateur idéalement est transparent. Des moyens de commande, telle qu'une source de tension U permettent d'appliquer un signal de commande au modulateur 1 de façon à déplacer à volonté son point de modulation.

Un détecteur d'intensité lumineuse 2 est associé au modulateur 1. Il reçoit du modulateur la lumière ayant traversé le modulateur et fournit en fonction de d'intensité lumineuse reçue, un signal qui est affiché sur un dispositif de détection DET.

L'exemple qui suit permet de clarifier le fonctionnement de l'invention.

Le modulateur 1 est éclairé par le faisceau E à analyser. Si le point de modulation du modulateur 1 ne correspond à aucune des longueurs d'ondes contenues dans le faisceau E, toute la lumière est transmise au détecteur 1 qui détecte donc le maximum d'intensité. Sous l'effet d'un signal de commande, le point de modulation de modulateur est déplacé, Lorsqu'il correspond à une longueur d'onde contenue dans le faisceau E, il absorbe en tout ou partie cette onde et le faisceau retransmis au détecteur 2 est diminué en intensité de la valeur correspondant à l'intensité absorbée.

En se reportant aux figures 5a et 5b on va maintenant décrire un exemple de réalisation préféré de l'invention dans lequel le modulateur 1 et de détecteur 2 sont réalisés sous forme de structures à puits quantiques empilés sur un même substrat S.

Ce dispositif comporte donc le substrat S, un empilement de couches SGG/SPG/SGG dopées formant un détecteur 2 à multipuits quantiques (DMPQ), pris en sandwich entre deux couches épaisses et très dopées le SPG assurant le contact ohmique et, au dessus, un empilement de couches SGG/SPG1/SPG2/SGG dopées formant le modulateur 1 à multipuits quantiques asymétriques MPQA pris en sandwich entre deux couches épaisses et très dopées de SPG formant un contact ohmique. Des contacts électriques sont pris sur le contact. ohmique du fond (CO1), celui intermédiaire entre le DMPQ et les MPQA (CO2) et celui le dessus (CO3). Le DMPQ est réalisé de telle sorte que sa réponse spectrale soit large, par exemple entre 8 et 12 micromètres. Une tension $V_1$ est appliquée entre CO1 et CO2 pour alimenter le DMPQ. Les MPQA sont réalisés de telle sorte que le pic d'absorption à hv' varie entre 8 et 12 micromètres suivant la tension appliquée V3 (figure 5b).

Le flux de photons $\emptyset_D$ arrivant au détecteur est alors :

$$\emptyset_D (h\nu) = \emptyset(h\nu) * [1 - \alpha(h\nu + qF\, \delta_{12})]$$

où $*$ dénote le produit de convolution. La réponse R du détecteur est alors :

$$R_D (h\nu) = R(h\nu) * [\emptyset(h\nu) * [1 - \alpha(h\nu + qF\, \delta_{12})]]$$

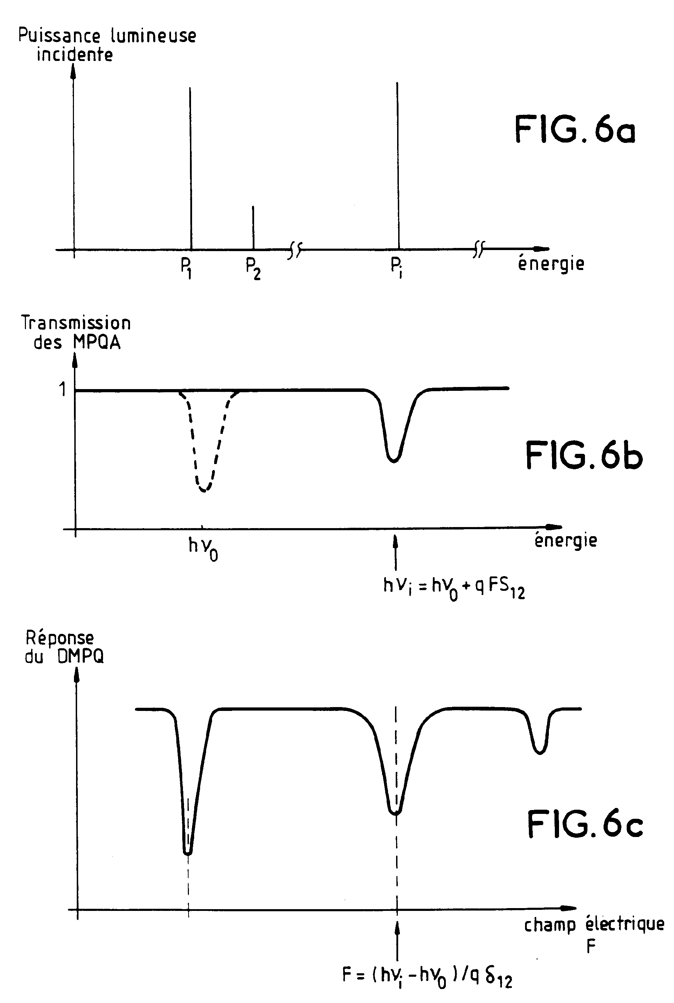

Connaissant R (hv) et $\alpha$ (hv), mesurant $R_D$ (hv) pour diverses valeurs de F on peut donc remonter à $\emptyset$ (hv), c'est-à-dire faire la spectrophotométrie du rayonnement incident, en effectuant la déconvolation de l'équation précédente. Un cas particulièrement simple et important est le cas où $\emptyset$(hv) est une série de pics d'émission ou d'absorption d'un gaz, un liquide, etc ... apparaissant à des énergies $h\nu_I$ (voir figure 6a). Lorsque l'on varie continuellement le champ électrique F appliqué aux MPQA, le pic d'absorption défile devant chaque pic d'émission incidente (figure 6b) pour des champs électriques donnés par :

$$F_i = (h\nu_i - h\nu_o)\, \frac{1}{q\, \delta_{12}}$$

La réponse du DMPQ qui intègre les contributions de tous les pics entre 8 et 12 μm, par exemple, est constante sauf lorsque le potentiel appliqué aux bornes des PQA satisfait à cette équation. La réponse présente alors un minimum de pic pour chaque $F^i$ MPQA (figure 6c). On a donc effectué un spectrophotomètre en balayant une tension appliquée au modulateur. Ce dispositif est bien un spectrophotomètre à l'état solide, voire microscopique.

Le contraste de spectrophotomètre peut être augmenté en utilisant une méthode de détection synchrone.

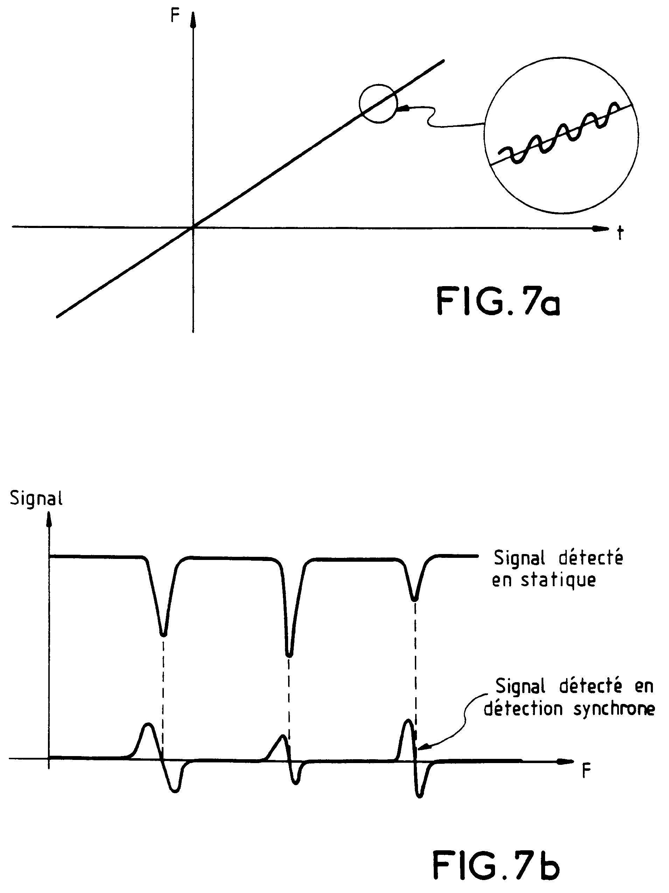

On fait balayer lentement le champ électrique appliqué et l'on superpose (par des moyens non représentés) à cette tension, une modulation alternative (figure 7a). On détecte alors le courant généré dans le détecteur MPQ par détection synchrone. Il est connu que le signal obtenu est la dérivée du signal obtenu dans la mesure statique précédente.

Le signal est donc non nul seulement près des pics, ce qui augmente le contraste (figure 7b).

Nous proposons maintenant un exemple de réalisation du dispositif. Le dispositif est réalisé par une technique de dépôt épitaxique selon l'art, comme l'épitaxie par jets moléculaires. A partir d'une plaquette de GaAs, on dépose 0.5 μm de GaAs-n+ (dopé à $10^{18}$ cm$^{-3}$ puis 100 puits quantiques GaAs (4nm) et $Al_{0.29}$ $Ga0._{71}$ As (30 nm) dopés dans les puits à $10^{18}$ cm$^{-3}$. On réalise ainsi de détecteur. Un tel détecteur répond entre 8 et 12 μm. On refait croître un contact ohmique de 0,5 μm de GaAs-n+ puis on re-épitaxie 100 puits quantiques disymétriques : GaAs (3,2 nm), $Al_{0.2}$ $Ga_{0.8}$ As (6,7 nm) et $Al_{0.35}Ga_{0.65}As$ (30 nm). Les deux niveaux $E'_1$ et $E'_2$ sont bien distants de 120 meV en énergie (10.6 μm). La distance $\delta_{12}$ entre les baricentres des deux états est de 4,5 nm. Les champs électriques applicables aux structures étant de l'ordre de + 50 kV/cm, le pic d'absorption peut être varié entre ± qF $\delta_{12}$ soit sur + 22.5 meV de part et d'autre du pic à F = 0, soit de 9 μm à 13 μm. La structure est terminée par un dépôt de 0.5 μm de GaAs-n+. Une première mésa est creusée par les techniques de l'art jusqu'au contact ohmique GaAs-n+ intermédiaire (jusqu'à M1 sur la figure 5a), puis une deuxième mésa est creusée jusqu'au contact ohmique GaAs -n+ du fond (jusqu'à M2 sur la figure 5a). Des électrodes de contats électriques tels que AuGeNi sont alliés aux contacts ohmiques par les techniques connues. L'échantillon ainsi réalisé présente toutes les caractéristiques nécessaires à la réalisation d'un spectrophotomètre.

Une variante de l'invention consisterait à utiliser un détecteur provenant d'un matériau détecteur différent, comme HgCdTe. Le désavantage d'une telle structure serait qu'il faudrait aligner le détecteur et les MPQA par collage ou par tout moyen mécanique. L'avantage proviendrait du fait que les températures de fonctionnement d'un tel tel système serait plus élevées, la détectivité de détecteurs à base de HgCdTe étant supérieure à ceux à base le MPQ.

**Revendications**

1. Spectromètre comprenant :
   - un modulateur d'intensité lumineuse en matériau semiconducteur (1) possédant une gamme de longueurs d'ondes de modulation qui est réglable en fonction d'un signal de commande, ce modulateur (1) recevant un faisceau optique (E) et retransmettant un faisceau optique modulé dans lequel toute longueur d'onde contenue dans la gamme de longueurs d'ondes de modulation est modulée par le modulateur ;
   - un détecteur d'intensité lumineuse (2) fonctionnant dans une large gamme de longueurs d'ondes, recevant le faisceau optique modulée et fournissant un signal électrique en fonction de l'intensité détectée

caractérisé en ce qu'il comporte :
   - sur un substrat (S) un empilement de couches alternées de matériaux semiconducteurs à grand gap et de matériaux semiconducteurs à petit gap enserré entre deux couches de matériaux semiconducteurs à petit gap dopées et supportant chacune un contact métallique (CO1 , CO2), cet ensemble formant un détecteur en matériaux semiconducteurs à puits quantiques (2) ;
   - sur le détecteur (2), au moins un empilement de couches alternées de matériau semiconducteur à grand gap (SGG) et de matériau semiconducteur à petit gap (SPG1, SPG2) cet empilement de couches étant enserré entre deux couches de matériau semiconducteur à petit gap dopées, recouvertes partiellement chacune d'un contact métallique (CO2, CO3), cet ensemble formant le modulateur (1) ;
   - une source de tension et un détecteur d'intensité connectés aux contacts ohmiques (CO1, CO2) du détecteur (2) ;
   - une source de tension commandable connectée aux contacts ohmiques (CO2, CO3) du modulateur (1).

2. Spectromètre selon la revendication 1, caractérisé en ce que le détecteur (2) est un détecteur en matériaux semiconducteurs à puits quantiques.

3. Spectromètre selon la revendication 2, caractérisé en ce que le modulateur (1) est un modulateur à puits quantiques asymétriques possédant au moins un empilement de couches alternées :
   . de matériau semiconducteur à grand gap (SGG) et
   . de matériau semiconducteur présentant un premier petit gap de valeur donnée (SPG1)
   . de matériau semiconducteur présentent un deuxième petit gap (SPG2) de valeur différente de celle du premier petit gap
   . de matériau semiconducteur à grand gap (SGG).

4. Spectromètre selon la revendication 3, caractérisé en ce que le détecteur (2) et le modulateur (1) possèdent une couche dopée et un contact ohmique (CO2) en commun.

5. Spectromètre selon la revendication 4, caractérisé en ce que :
   - le substrat (S) en GaAs
   - le matériau semiconducteur à petit gap du détecteur est du GaAs
   - le matériau semiconducteur à grand gap du détecteur est du $Al_xGa_{1-x}As$.

6. Spectromètre selon la revendication 5, caractérisé en ce que pour le modulateur :
   - le matériau à grand gap est $Al_yGa_{1-y}As$ ;
   - le matériau présentant le premier petit gap (SPG1) est du GaAs ;
   - le matériau présentant le deuxième petit gap (SPG2) est du $Al_xGa_{1-x}As$ avec x inférieur à y.

7. Spectromètre selon la revendication 1, caractérisé en ce que le détecteur est en HgCdTe.


## Patentansprüche

1. Spektrometer, enthaltend:
   - einen Lichtintensitätsmodulator (1) aus Halbleitermaterial, der einen Modulationswellenlängenbereich aufweist, der in Abhängigkeit von einem Steuersignal einstellbar ist, wobei dieser Modulator (1) einen Lichtstrahl (E) empfängt und einen modulierten Lichtstrahl weitergibt, in dem jede Wellenlänge, die in dem Modulationswellenlängenbereich enthalten ist, durch den Modulator moduliert ist;
   - einen in einem großen Wellenlängenbereich arbeitenden Lichtintensitätsdetektor (2), der den modulierten Lichtstrahl empfängt und ein elektrisches Signal in Abhängigkeit von der erfaßten Lichtintensität liefert;
   dadurch gekennzeichnet, daß es folgendes enthält:
   - einen auf einem Substrat (S) vorgesehenen Stapel von sich abwechselnden Schichten aus Breitband-Halbleitermaterialien und aus Schmalband-Halbleitermaterialien, der zwischen zwei dotierten Schichten aus Schmalband-Materialien eingeschlossen ist, die jeweils einen Metallkontakt (CO1, CO2) tragen, wobei diese Einheit einen Detektor (2) aus Halbleitermaterialien mit Quantentöpfen bildet;
   - wenigstens einen auf dem Detektor (2) vorgesehenen Stapel aus sich abwechselnden Schichten aus Breitband-Halbleitermaterial (SGG) und aus Schmalband-Halbleitermaterial (SPG1, SPG2), wobei dieser Stapel von Schichten zwischen zwei dotierten Schichten aus Schmalband-Halbleitermaterial eingeschlossen ist, die jeweils teilweise von einem Metallkontakt (CO2, CO3) bedeckt sind, wobei diese Einheit den Modulator (1) bildet;
   - eine Spannungsquelle und einen Intensitätsdetektor, die mit den ohmschen Kontakten (CO1, CO2) des Detektors (2) verbunden sind;
   - eine mit den ohmschen Kontakten (CO2, CO3) des Modulators (1) verbundene steuerbare Spannungsquelle.

2. Spektrometer nach Anspruch 1, dadurch gekennzeichnet, daß der Detektor (2) ein Detektor aus Halbleitermaterialien mit Quantentöpfen ist.

3. Spektrometer nach Anspruch 2, dadurch gekennzeichnet, daß der Modulator (1) ein Modulator mit asymmetrischen Quantentöpfen ist, der wenigstens einen Stapel sich abwechselnder Schichten enthält, bestehend aus:
   . Breitband-Halbleitermaterial (SGG) und
   . Halbleitermaterial (SPG1), das einen ersten kleinen Bandabstand von vorgegebenem Wert aufweist
   . Halbleitermaterial (SPG2), das einen zweiten kleinen Bandabstand von einem Wert aufweist, der von dem des ersten kleinen Bandabstands verschieden ist
   . Breitband-Halbleitermaterial (SGG).

4. Spektrometer nach Anspruch 3, dadurch gekennzeichnet, daß der Detektor (2) und der Modulator (1) eine dotierte Schicht und einen gemeinsamen ohmschen Kontakt (CO2) besitzen.

5. Spektrometer nach Anspruch 4, dadurch gekennzeichnet, daß:
   - das Substrat (S) aus GaAs besteht
   - das Schmalband-Halbleitermaterial des Detektors aus GaAs besteht
   - das Breitband-Halbleitermaterial des Detektors aus $Al_xGa_{1-x}As$ besteht.

6. Spektrometer nach Anspruch 5, dadurch gekennzeichnet, daß bei dem Modulator:
   - das Breitband-Material $Al_yGa_{1-y}As$ ist;
   - das den ersten kleinen Bandabstand aufweisende Material (SPG1) aus GaAs besteht;
   - das den zweiten kleinen Bandabstand aufweisende Material (SPG2) aus $Al_xGa_{1-x}As$ besteht, wobei x kleiner als y ist.

7. Spektrometer nach Anspruch 1, dadurch gekennzeichnet, daß der Detektor aus HgCdTe besteht.


## Claims

1. Spectrometer comprising:
   - a light-intensity modulator (1) made of semiconductor material possessing a range of modulation wavelengths which can be adjusted as a function of a control signal, this modulator (1) receiving an optical beam (E) and retransmitting a modulated optical beam in which every wavelength contained in the range of wavelengths is modulated by the modulator;
- a light-intensity detector (2) operating within a wide range of wavelengths, receiving the modulated optical beam and delivering an electrical signal as a function of the intensity detected
characterized in that it includes:
- on a substrate (S), a stack of alternating layers of large-gap semiconductor materials and of small-gap semiconductor materials, this stack being sandwiched between two doped layers of small-gap semiconductor materials each supporting a metallic contact (CO1, CO2), this assembly forming a multiple-quantum-well detector (2) made of semiconductor materials;
- on the detector (2), at least one stack of alternating layers of large-gap semiconductor material (LGS) and of small-gap semiconductor material (SGS1, SGS2)
this stack of layers being sandwiched between two doped layers of small-gap semiconductor material each partially covered with a metallic contact (CO2, CO3), this assembly forming the modulator (1);
- a voltage source and an intensity detector connected to the ohmic contacts (CO1, CO2) of the detector (2);
- a controllable voltage source connected to the ohmic contacts (CO2, CO3) of the modulator (1).

2. Spectrometer according to Claim 1, characterized in that the detector (2) is a multiple-quantum-well detector made of semiconductor materials.

3. Spectrometer according to Claim 2, characterized in that the modulator (1) is an asymmetricmultiple-quantum-well modulator possessing at least one stack of alternating layers:
. of large-gap semiconductor material (LGS) and
. of semiconductor material (SGS1) having a first small gap of a given value
. of semiconductor material (SGS2) having a second small gap whose value is different from that of the first small gap
. of large-gap semiconductor material (LGS)

4. Spectrometer according to Claim 3, characterized in that the detector (2) and the modulator (1) possess a doped layer and an ohmic contact (CO2) in common.

5. Spectrometer according to Claim 4, characterized in that:
- the substrate (S) is made of GaAs
- the small-gap semiconductor material of the detector is GaAs
- the large-gap semiconductor material of the detector is $Al_xGa_{1-x}As$.

6. Spectrometer according to Claim 5, characterized in that, for the modulator:
- the large-gap material is $Al_yGa_{1-y}As$;
- the material (SGS1) having the first small gap is GaAs;
- the material (SGS2) having the second small gap is $Al_yGa_{1-y}As$ with x less than y.

7. Spectrometer according to Claim 1, characterized in that the detector is made of HgCdTe.

FIG.1a

FIG.1b

FIG.1c

SGG    SPG 1    SPG 2    SGG

# FIG.2a

$E'_2$

$\Delta E_1$   $\Delta E_2$

$E'_1$

$S_{12}$

# FIG.2b

FIG.2c

Contact ohmique CO 1

V₁

n +

N fois

SPG 2

SPG 1

SGG

PQA

Contact ohmique CO 2

n +

Substrat

FIG.4

U

1

DET

2

$h\nu_0$

$E'_2$

$E'_1$

F = 0

# FIG.3a

$q\,FS_{12}$

F > 0

# FIG.3b

Absorption
des PQA

F = 0

F < 0

F > 0

$h\nu$

$h\nu_0$

$h\nu_0 + q\,FS_{12}$

# FIG.3c

FIG.5a

FIG.5b

FIG.5a

FIG.5b

# FIG.6a

Puissance lumineuse
incidente

$P_1$ $P_2$ $P_i$ énergie

# FIG.6b

Transmission
des MPQA

1

$h\nu_0$ énergie

$h\nu_i = h\nu_0 + q\,FS_{12}$

# FIG.6c

Réponse
du DMPQ

champ électrique
F

$F = (h\nu_i - h\nu_0)/q\,\delta_{12}$

FIG.7a

Signal détecté
en statique

Signal détecté en
détection synchrone

FIG.7b